# EUROPÄISCHE PATENTSCHRIFT

(11) **EP 3 629 473 B1**
(45) Veröffentlichungstag und Bekanntmachung des Hinweises auf die Patenterteilung: **01.06.2022**
(21) Anmeldenummer: 18197565.7
(22) Anmeldetag: 28.09.2018
(51) Int. Cl.: H02P 29/50

(54) **VERFAHREN ZUM BETREIBEN EINER ELEKTRISCHEN MASCHINE**
METHOD FOR OPERATING AN ELECTRIC MACHINE
PROCÉDÉ DE FONCTIONNEMENT D'UNE MACHINE ÉLECTRIQUE

(43) Veröffentlichungstag der Anmeldung: 01.04.2020
(73) Patentinhaber: Schneider Electric Industries SAS, 92500 Rueil-Malmaison (FR)
(72) Erfinder: HAN, Zhaoqiang, 77933 Lahr (DE); JANEK, Gunther, 63773 Goldbach (DE)
(74) Vertreter: Manitz Finsterwald Patent- und Rechtsanwaltspartnerschaft mbB

(56) Entgegenhaltungen:
- EP-A1- 0 239 806
- WO-A1-2009/156306
- WO-A1-2016/180469
- DE-A1-102009 000 928

## Beschreibung

Die vorliegende Erfindung betrifft ein Verfahren zum Betreiben einer elektrischen Maschine, insbesondere eines elektrischen Motors. Bei dem Verfahren wird die elektrische Maschine elektrisch mit einer Steuereinheit verbunden. Beim Betrieb der elektrischen Maschine unterliegt die Maschine Verzerrungen (Störeinflüssen), insbesondere meist mechanisch bedingten harmonischen Verzerrungen (harmonic distortions).

Aus der WO 2009/156306 A1 ist ein Verfahren gemäß dem Oberbegriff des Anspruchs 1 bekannt. Die DE 10 2009 000 928 A1 betrifft die Verringerung der Drehmomentwelligkeit eines Elektromotors.

Verzerrungen können beim Betrieb von elektrischen Maschinen beispielsweise durch Rastmomente auftreten, wenn die elektrische Maschine z.B. Permanentmagnete umfasst. Die Verzerrungen können sich beispielsweise in Änderungen der Drehgeschwindigkeit oder in mechanischen Vibrationen äußern.

Nachteiligerweise beeinträchtigen die Verzerrungen einen konstanten Gleichlauf der elektrischen Maschine und können eine Positioniergenauigkeit verschlechtern. Dies ist insbesondere bei Anwendungen unerwünscht, in welchen eine hohe Positioniergenauigkeit gefordert wird, beispielsweise bei angetriebenen Druckrollen.

Es ist daher die der Erfindung zugrunde liegende Aufgabe, ein Verfahren anzugeben, welches es ermöglicht, Verzerrungen zu reduzieren und insbesondere einen verbesserten Gleichlauf und/oder eine höhere Positioniergenauigkeit zu erzielen.

Diese Aufgabe wird durch ein Verfahren gemäß Anspruch 1 gelöst.

Nach dem offenbarten Verfahren werden die Verzerrungen nur zum Teil erfasst, indem wiederholt eine erste Wandlung der Verzerrungen in den Frequenzbereich nur für diejenigen Verzerrungen erfolgt, welche innerhalb eines vorbestimmten ersten Frequenzspektrums liegen, wobei auf der Grundlage der ersten Wandlung ein Ausgleichssignal erzeugt wird, welches die Verzerrungen vermindert.

Die Offenbarung setzt dabei auf der Erkenntnis auf, dass eine vollständige Analyse, das heißt eine vollständige Erkennung aller Verzerrungen im Frequenzbereich, insbesondere kombiniert mit dem Versuch, die Verzerrungen vollständig zu beseitigen, nicht derart schnell durchführbar ist, dass eine Verminderung der Verzerrungen im realen Betrieb - mit sich ständig verändernden Randbedingungen bzw. Betriebsparametern - realisiert werden kann. Aus diesem Grund wird nur innerhalb des ersten Frequenzspektrums nach Verzerrungen gesucht und/oder nur die in dem ersten Frequenzspektrum enthaltenen Verzerrungen werden überhaupt in den Frequenzbereich transformiert. Hierdurch wird der Berechnungsaufwand für die Wandlung in den Frequenzbereich deutlich minimiert, sodass die im Frequenzbereich erfassten Verzerrungen dann bevorzugt in Echtzeit durch die Erzeugung eines Ausgleichssignals vermindert oder gar vollständig eliminiert werden können. Aufgrund des benötigten niedrigen Rechenaufwands und der dadurch erzielbaren hohen Geschwindigkeit, mit welcher die Verzerrungen in dem ersten Frequenzspektrum erkannt werden können, ist es somit z.B. möglich, eine adaptive Regelung durchzuführen, wie später noch genauer ausgeführt wird.

Nachfolgend werden noch weitere Details des offenbarten Verfahrens beschrieben.

Es versteht sich, dass nicht nur die Verzerrungen alleine in den Frequenzbereich transformiert werden, sondern es wird ein Signal, insbesondere ein Messsignal, welches potentiell Verzerrungen umfasst, in den Frequenzbereich transformiert, wobei dann im Frequenzbereich die Verzerrungen erkannt werden können.

Insbesondere handelt es sich bei den Verzerrungen um harmonische Verzerrungen ("Harmonische" oder Englisch "harmonic distortions"). Diese harmonischen Verzerrungen weisen üblicherweise eine Frequenz von einem Vielfachen der Drehfrequenz (d.h. der Achsfrequenz) der elektrischen Maschine auf.

Die Verzerrungen können allgemein mechanische Störeinflüsse von extern oder intern der elektrischen Maschine sein. Beispielsweise können die Verzerrungen durch magnetische Rastmomente innerhalb der elektrischen Maschine verursacht werden. Alternativ oder zusätzlich können die Verzerrungen durch abtriebsseitige periodische mechanische Einflüsse erzeugt werden, beispielsweise durch ein an die elektrische Maschine angeschlossenes Getriebe oder allgemein durch eine angetriebene Last.

Bevorzugt werden mit dem hierin beschriebenen Verfahren Verzerrungen beseitigt, die an derselben Position innerhalb einer Umdrehung der elektrischen Maschine oder an derselben Position innerhalb einer Umdrehung/Periode einer angetriebenen Last auftreten und welche sich durch die Drehung der elektrischen Maschine - insbesondere im Gleichlauf - dann periodisch wiederholen.

Es versteht sich weiterhin, dass das hierin beschriebene Verfahren insbesondere für rotierende aber auch für lineare elektrische Maschinen anwendbar ist, beispielsweise für elektrische Motoren oder Generatoren, insbesondere für permanentmagnetisch erregte, bürstenlose Elektromotoren.

Das erste Frequenzspektrum umfasst bevorzugt einen oder mehrere abgeschlossene Frequenzbereiche. Dies bedeutet, das erste Frequenzspektrum kann beispielsweise ausschließlich einen Frequenzbereich von 10 Hz bis 50 Hz umfassen.

Alternativ besteht auch die Möglichkeit, dass das erste Frequenzspektrum mehrere abgeschlossene Frequenzbereiche umfasst (z.B. von 10 bis 20 Hz, von 40 bis 50 Hz und von 80 bis 90 Hz).

Wird das hierin beschriebene Verfahren, beispielsweise auf einen sich im Betrieb befindlichen Elektromotor angewendet, so kann das erste Frequenzspektrum beispielsweise ausschließlich einen Frequenzbereich zwischen 10 und 30 Hz umfassen. Damit werden Verzerrungen des Elektromotors nur im Frequenzbereich zwischen 10 und 30 Hz erfasst. Die so erfassten Verzerrungen werden dann mittels eines Ausgleichssignals reduziert, wobei das Ausgleichssignal beispielsweise über elektrische Anschlussleitungen elektrisch dem Motor zugeführt werden kann. Die auf diese Weise reduzierten Verzerrungen führen dazu, dass die Positioniergenauigkeit und der Gleichlauf des Elektromotors deutlich erhöht werden können.

Vorteilhafte Weiterbildungen sind der Beschreibung, den Zeichnungen sowie den abhängigen Ansprüchen zu entnehmen.

Gemäß einer ersten vorteilhaften Ausführungsform erfolgt die erste Wandlung mittels einer diskreten Fourier-Transformation (DFT) und/oder mittels des Goertzel-Algorithmus. Sowohl die DFT als auch der Goertzel-Algorithmus erlauben es, nur einen Teilbereich von Frequenzen in den Frequenzbereich zu transformieren. Die DFT und/oder der Goertzel-Algorithmus können so angepasst sein, dass nur eine Wandlung für das erste Frequenzspektrum vorgenommen wird.

Von besonderem Vorteil beim Einsatz der DFT und/oder des Goertzel-Algorithmus ist es, dass beide, bevorzugt nur, durch den Einsatz von Multiplikationen ausgeführt werden können. Daher sind insbesondere keine zeitaufwändigen trigonometrischen Berechnungen (wie bei einer "normalen" Fourier-Transformation) notwendig, wodurch die hohe Geschwindigkeit des Verfahrens weiter gesteigert werden kann.

Gemäß einer weiteren vorteilhaften Ausführungsform wird das Ausgleichssignal in Echtzeit aus und/oder basierend auf dem Ergebnis der ersten Wandlung adaptiv erzeugt. Das Ausgleichssignal wird also bevorzugt anhand der in den Frequenzbereich transformierten Verzerrungen erzeugt. Unter Echtzeit ist in diesem Zusammenhang zu verstehen, dass das Ausgleichssignal vorliegt, bevor die elektrische Maschine maximal zehn, bevorzugt fünf, besonders bevorzugt eine weitere volle Umdrehung nach Vorliegen der Verzerrung vollführt hat. Adaptiv ist in diesem Zusammenhang so zu verstehen, dass das Ausgleichssignal wiederholt neu erzeugt wird und so dynamisch an Änderungen des Ergebnisses der ersten Wandlung angepasst wird, beispielsweise wenn das Ausgleichssignal von einer Umdrehung der elektrischen Maschine zur nächsten verändert werden soll.

Bei der Verwendung der DFT und/oder des Goertzel-Algorithmus kann zudem vorteilhafterweise auf eine vorgelagerte Speicherung der Messsignale oder Messdaten, welche die Verzerrungen enthalten, vor der Verarbeitung durch die DFT und/oder den Goertzel-Algorithmus verzichtetet werden. Stattdessen ist es möglich, die jeweils aktuellen Messdaten direkt, d.h. online bzw. on-the-fly, der DFT und/oder dem Goertzel-Algorithmus zuzuführen. In jedem Takt der Ermittlung der Messdaten kann somit ein neuer Messwert der DFT und/oder dem Goertzel-Algorithmus zugeführt werden. Die DFT und/oder der Goertzel-Algorithmus können dementsprechend nach Art einer Pipeline die jeweils neu zugeführten Messdaten verarbeiten.

Bei dem Ausgleichssignal kann es sich insbesondere um ein elektrisches Signal handeln, welches der elektrischen Maschine über Anschlussleitungen elektrisch zugeführt wird. Das Ausgleichssignal kann somit insbesondere durch Spulen der elektrischen Maschine geführt werden, wodurch bevorzugt in der elektrischen Maschine eine Veränderung des herrschenden Magnetfelds derart vorgenommen wird, dass die Verzerrungen minimiert werden. Hierzu kann das Ausgleichssignal insbesondere in seiner Phase an die jeweilige Rotationsposition der elektrischen Maschine angepasst sein. Beispielsweise kann das Ausgleichssignal gegen das Rastmoment "gegensteuern", um das Rastmoment auszugleichen. Auf diese Weise treten das Rastmoment und damit die Verzerrung effektiv nicht zutage, wodurch die Verzerrung die Positioniergenauigkeit und den Gleichlauf der elektrischen Maschine nicht beeinträchtigen kann.

Gemäß einer weiteren vorteilhaften Ausführungsform ist das vorbestimmte erste Frequenzspektrum auf eine Maximalfrequenz beschränkt und/oder umfasst mehrere abgeschlossene Frequenzbänder. Bei der Maximalfrequenz kann es sich beispielsweise um eine vorbestimmte Frequenz handeln, die dem 3-, 5-, 7-, 10- oder 20-fachen der Rotationsfrequenz der elektrischen Maschine entsprechen kann. Durch die Maximalfrequenz wird eine Begrenzung der in den Frequenzbereich zu transformierenden Daten bzw. Verzerrungen geschaffen, wodurch die Echtzeitfähigkeit der Transformation in den Frequenzbereich erhalten bleiben kann.

Wie oben bereits angedeutet, kann das erste Frequenzspektrum auch mehrere abgeschlossene Frequenzbänder umfassen. Beispielsweise kann ein erstes Frequenzband eine Mittenfrequenz bei 10 Hz, ein zweites Frequenzband eine Mittenfrequenz bei 30 Hz und ein drittes Frequenzband eine Mittenfrequenz bei 50 Hz aufweisen, wobei jedes Frequenzband eine Bandbreite von 2 oder 5 Hz aufweisen kann. Die genannten Frequenzbänder bilden dann gemeinsam das erste Frequenzspektrum. Alternativ oder zusätzlich kann das erste Frequenzspektrum auch, bevorzugt nur, einzelne Frequenzen umfassen. Rein beispielhaft kann das erste Frequenzspektrum daher die Frequenzen 10 Hz, 30 Hz und 50 Hz aufweisen. Die einzelnen Frequenzen können wiederum bevorzugt Vielfache der Rotationsfrequenz der elektrischen Maschine sein.

Gemäß einer weiteren vorteilhaften Ausführungsform wird das erste Frequenzspektrum derart vorbestimmt, dass das erste Frequenzspektrum nur eine vorbestimmte maximale Anzahl von Verzerrungsmaxima beinhaltet, insbesondere maximal 6 oder 3 Verzerrungsmaxima. Dies bedeutet, dass nur die 6 oder 3 dominantesten Verzerrungen oder die 6 oder 3 dominantesten harmonischen Verzerrungen in den Frequenzbereich transformiert und dementsprechend dann auch mittels des Ausgleichssignals kompensiert werden. Durch die absichtliche Beschränkung auf eine vorbestimmte Anzahl von Verzerrungsmaxima (z.B. auf 6 oder 3 oder auch 4 bis 10) wird ein Kompromiss aus der benötigten Rechenleistung und der Güte der Verzerrungsreduktion gebildet. Auf diese Weise kann die Transformation in den Frequenzbereich und/oder die Erzeugung des Ausgleichssignals von einem handelsüblichen digitalen Signalprozessor (DSP), insbesondere in Echtzeit, realisiert werden.

Gemäß einer weiteren vorteilhaften Ausführungsform wird das Ausgleichssignal mithilfe einer Nachschlagetabelle generiert. Die Nachschlagetabelle (oder Lookup-Table - LUT) enthält für mögliche Verzerrungen, welche im Frequenzbereich erkannt werden, jeweils geeignete Repräsentationen von Ausgleichssignalen. Durch die Nachschlagetabelle kann die Rechenlast für z.B. einen DSP weiter gesenkt werden. Eine Nachschlagetabelle eignet sich sowohl für das Vorhandensein nur weniger Verzerrungen und/oder nur weniger Harmonischer, als auch für den Ausgleich eines größeren Spektrums von Verzerrungen. Die Nachschlagetabelle kann in einem DSP hinterlegt sein.

Gemäß einer weiteren vorteilhaften Ausführungsform wird das Ausgleichssignal, wie bereits angedeutet, mit Hilfe eines adaptiven Algorithmus generiert wird, wobei der adaptive Algorithmus neu auftretende Verzerrungen erkennt und vermindert. Auf diese Weise kann flexibel auf neu auftretende Verzerrungen reagiert werden.

Der adaptive Algorithmus kann jeweils wiederholt, z.B. nach Änderungen der Rotationsgeschwindigkeit der elektrischen Maschine, eine neue Nachschlagetabelle erzeugen, welche auf die neue Rotationsgeschwindigkeit und die dabei auftretenden Verzerrungen angepasst ist.

Gemäß einer weiteren vorteilhaften Ausführungsform werden die Verzerrungen basierend auf Änderungen im zeitlichen Verlauf der Position und/oder der Geschwindigkeit und/oder des elektrischen Stroms der elektrischen Maschine ermittelt. Die Verzerrungen, welche üblicherweise mechanischen Ursprungs sind, lassen sich auf verschiedene Art und Weise messen und somit detektieren. So kann ein Positionssignal (P oder θ) der elektrischen Maschine oder ein Positionsfehlersignal (ΔP oder Δθ) gemessen und in den Frequenzbereich transformiert werden. Oszillationen des Positionssignals bzw. des Positionsfehlersignals können dann auf Verzerrungen oder harmonische Verzerrungen hinweisen. In entsprechender Weise kann ein Geschwindigkeitssignal (ω) oder ein Geschwindigkeitsfehlersignal (Δω) gemessen und in den Frequenzbereich transformiert werden. Schließlich ist es auch möglich, einen Motorstrom (I_{q}) oder einen Fehler im Motorstrom (ΔI_{q}) zu messen und in den Frequenzbereich zu transformieren. Sämtliche vorgenannten Möglichkeiten können entweder allein oder in Kombination miteinander verwendet werden.

Gemäß einer weiteren vorteilhaften Ausführungsform wird ein Fehlersignal einer Messgröße (d.h. eines gemessenen Signals) für die Wandlung in den Frequenzbereich verwendet. Dies kann sowohl die erste Wandlung, als auch die nachstehend beschriebene zweite Wandlung betreffen. Ein Vorteil der Verwendung des Fehlersignals (z.B. eines Schleppfehlers, welcher aus der gemessenen Position ermittelt wird oder eines Geschwindigkeitsfehlers, welcher aus der gemessenen Geschwindigkeit ermittelt wird oder eines Stromfehlers, welcher aus dem gemessenen Motorstrom ermittelt wird) ist, dass das Fehlersignal üblicherweise weniger Frequenzen enthält und die Verzerrungen somit leichter erkannt werden können.

Erfindungsgemäß erfolgt eine zweite Wandlung der Verzerrungen in den Frequenzbereich, wobei die zweite Wandlung für ein zweites Frequenzspektrum erfolgt, welches größer als das erste Frequenzspektrum ist und das erste Frequenzspektrum umfasst, wobei anhand des Ergebnisses der zweiten Wandlung das erste Frequenzspektrum vorbestimmt wird. Dies bedeutet, mittels der zweiten Wandlung wird ein größeres Frequenzspektrum analysiert. Größer bedeutet in diesem Fall, dass mehr Frequenzen analysiert werden, als in dem ersten Frequenzspektrum enthalten sind. In dem größeren zweiten Frequenzspektrum werden dann die momentan vorhandenen Verzerrungen identifiziert. Basierend auf den identifizierten Verzerrungen wird dann das erste Frequenzspektrum so gewählt und/oder in Frequenzbänder aufgeteilt, dass die erkannten Verzerrungen (oder genauer gesagt die Frequenzen, auf welchen die erkannten Verzerrungen liegen) in dem ersten Frequenzspektrum liegen. Anders gesagt, werden Frequenz-Bins so gewählt, dass diese die erkannten Verzerrungen oder zumindest die dominantesten Verzerrungen/Harmonischen enthalten.

Die zweite Wandlung liefert also eine Vorauswahl der später mittels der ersten Wandlung zu überwachenden Frequenzen. Bei der zweiten Wandlung können gegebenenfalls auch sämtliche Frequenzen, das heißt das gesamte Frequenzspektrum, in den Frequenzbereich transformiert werden. Dies kann beispielsweise mittels schneller Fourier-Transformation (FFT) erfolgen.

Erfindungsgemäß wird die zweite Wandlung wiederholt und zugleich weniger oft als die erste Wandlung durchgeführt, insbesondere mehr als 10, 100, 500 oder 1000 Mal seltener als die erste Wandlung. Da die zweite Wandlung auf ein größeres oder gar vollständiges Spektrum angewandt wird, benötigt die zweite Wandlung deutlich mehr Zeit und eignet sich daher nicht für eine adaptive Anpassung des Ausgleichssignals in Echtzeit. Die zweite Wandlung dient aber dazu, die erste Wandlung auf die relevanten Frequenzen "anzusetzen", sodass mit der ersten Wandlung dann eine schnelle Erzeugung eines korrekten Ausgleichssignals möglich ist.

Die zweite Wandlung kann in vorbestimmten periodischen Abständen erfolgen, z.B. nachdem die erste Wandlung 10, 100, 500 oder 1000 Mal durchgeführt wurde. Alternativ oder zusätzlich kann die zweite Wandlung auch dann erfolgen, wenn die Rotationsgeschwindigkeit der elektrischen Maschine sich zumindest um eine vorbestimmten Schwellenwert (z.B. um mehr als 5 % oder 10 %) verändert hat oder wenn die erfassten Verzerrungen sich zumindest um einen vorbestimmten Schwellenwert verändert haben (z.B. die Amplitude eines Schleppfehlers ändert sich um mehr als 0,1° oder um mehr als 0,3°).

Ebenfalls ist es möglich, dass die zweite Wandlung dann durchgeführt wird, wenn sich die Rotationsgeschwindigkeit der elektrischen Maschine erstmalig für eine vorbestimmte Zeitdauer (z.B. 1, 10 oder 100 ms) nicht um mehr als einen vorbestimmten Schwellenwert (z.B. 10 %) verändert hat. Dasselbe Kriterium kann auch dazu dienen, die wiederholte Durchführung der ersten Wandlung anzustoßen.

Gemäß einer weiteren vorteilhaften Ausführungsform ist das Ausgleichssignal ein elektrisches Stromsignal, welches der elektrischen Maschine zugeführt wird. Das Ausgleichssignal kann mit dem normalen Ansteuersignal, welches beispielsweise eine Drehung eines Elektromotors bewirkt, überlagert werden. Das so entstehende effektive Ansteuersignal wird dadurch abgeändert.

Gemäß einer weiteren vorteilhaften Ausführungsform wird der elektrischen Maschine ein elektrisches Ansteuersignal zugeführt, welches von der Steuereinheit erzeugt wird, wobei die Steuereinheit in Reihe geschaltet eine Positions-Steuerung und/oder eine Geschwindigkeits-Steuerung und/oder eine Strom-Steuerung umfasst, wobei das Ausgleichssignal bevorzugt dem Eingangssignal der Strom-Steuerung hinzugefügt wird. Die Steuereinheit kann jeweils Feed-Forward-Steuerungen (d.h. Vorsteuerungen) für die Position, die Geschwindigkeit und/oder den Strom umfassen. Hierdurch besteht die Möglichkeit, das Ausgleichssignal nicht nur dem Eingangssignal der Strom-Steuerung hinzuzufügen. Alternativ oder zusätzlich ist es hierdurch auch möglich, das Ausgleichssignal der Positions-Steuerung und/oder der Geschwindigkeits-Steuerung zuzuführen.

Die Offenbarung betrifft weiterhin ein System mit einer elektrischen Maschine und einer Steuereinheit, wobei
- die elektrische Maschine elektrisch mit der Steuereinheit verbunden ist,
- die elektrische Maschine beim Betrieb Verzerrungen, insbesondere harmonischen Verzerrungen, unterliegt.

Das System zeichnet sich dadurch aus, dass die Steuereinheit ausgebildet ist, die Verzerrungen nur zum Teil zu erfassen, indem von der Steuereinheit wiederholt eine erste Wandlung der Verzerrungen in den Frequenzbereich nur für diejenigen Verzerrungen durchgeführt wird, welche innerhalb eines vorbestimmten ersten Frequenzspektrums liegen, wobei die Steuereinheit auf der Grundlage der ersten Wandlung ein Ausgleichssignal erzeugt, welches die Verzerrungen vermindert. Die elektrische Maschine ist bevorzugt ein bürstenloser Elektromotor, beispielsweise permanentmagnetisch erregt. Die elektrische Maschine kann auch ein Servomotor sein, bei welchem die Positioniergenauigkeit durch das Ausgleichssignal erhöht werden kann.

Schließlich ist es auch möglich, dass es sich bei der elektrischen Maschine um einen Generator handelt. Bei dem Generator kann durch das Ausgleichssignal eine Reduktion der mechanischen Verzerrungen und dadurch z.B. von mechanischen Schwingungen erzielt werden. Hierdurch kann beispielsweise eine Geräuschreduktion in elektrischen Fahrzeugen während eines Generator- bzw. Bremsbetriebs realisiert werden. Auch kann die Reduktion der mechanischen Schwingungen zu einer Verringerung des Verschleißes (z.B. von mechanischen Lagern) führen, was beispielsweise die Lebensdauer von Generatoren in Windenergiekonvertern erhöhen kann.

Im Übrigen gelten die hierin getroffenen Aussagen zum Verfahren für das System entsprechend. Dies gilt insbesondere für Vorteile und bevorzugte Ausführungsformen.

Nachfolgend wird die Erfindung rein beispielhaft unter Bezugnahme auf die Zeichnungen beschrieben. Es zeigen:
- Fig. 1: schematisch eine elektrische Maschine, eine Steuereinheit und eine Last;
- Fig. 2: schematisch den Aufbau einer Motorsteuerung der elektrischen Maschine;
- Fig. 3A und 3B: harmonische Verzerrungen im Zeit- und Frequenzbereich bei verschiedenen Rotationsgeschwindigkeiten der elektrischen Maschine; und
- Fig. 4: die Reduktion von harmonischen Verzerrungen durch iterativ erzeugte Ausgleichssignale.

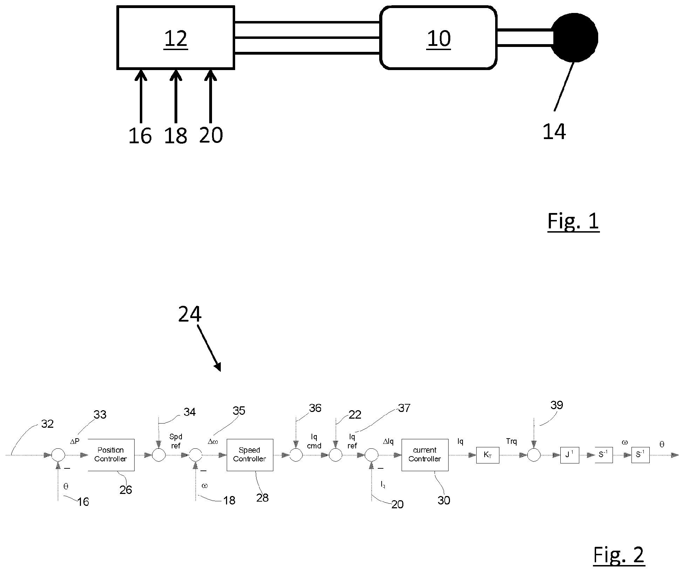

Fig. 1 zeigt einen Elektromotor 10, das heißt eine elektrische Maschine. Der Elektromotor 10 wird von einer Steuereinheit 12 dreiphasig elektrisch angesteuert. Der Elektromotor 10 dreht im Betrieb eine Last 14.

Der Steuereinheit 12 werden Messgrößen des Elektromotors 10 zugeführt, nämlich eine Winkelposition 16 (θ), eine Geschwindigkeit 18 (ω) und ein gemessener Motorstrom 20 (I_{q}). Zusätzlich wird aus der Winkelposition 16 ein Schleppfehler 33, aus der Geschwindigkeit 18 ein Geschwindigkeitsfehler 35 und aus dem Motorstrom 20 ein Stromfehler 37 ermittelt.

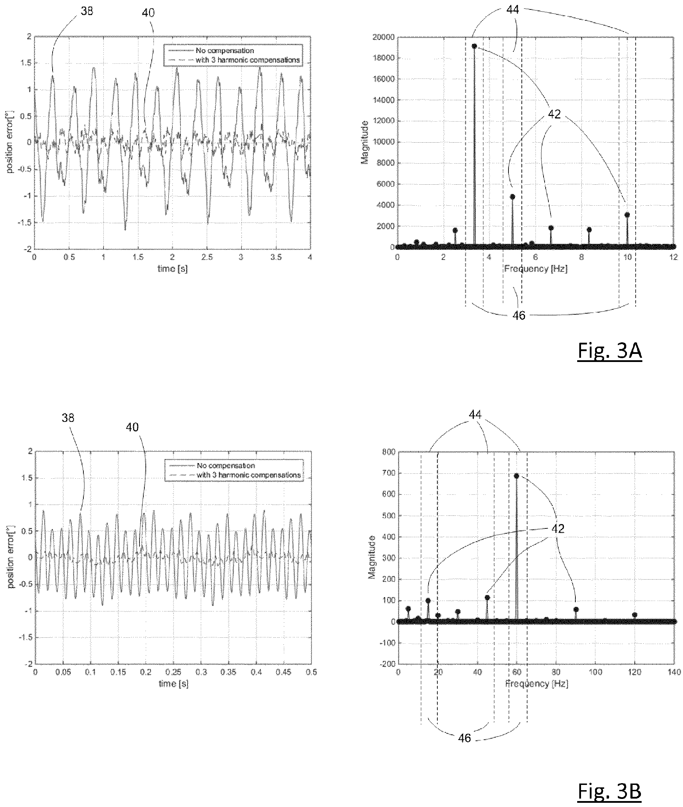

Aus der Winkelposition 16 und/oder der Geschwindigkeit 18 und/oder dem Motorstrom 20 und/oder dem Schleppfehler 33 und/oder dem Geschwindigkeitsfehler 35 und/oder dem Stromfehler 37 ermittelt die Steuereinheit 12 die gerade in dem Elektromotor 10 herrschenden harmonischen Verzerrungen 42 (siehe Fig. 3A und 3B). Hierbei wird bevorzugt für den Schleppfehler 33, den Geschwindigkeitsfehler 35 und/oder den Stromfehler 37 zunächst eine Wandlung in den Frequenzbereich für ein großes Frequenzspektrum vorgenommen (vorstehend als zweite Wandlung bezeichnet). Dabei werden die ungefähren Positionen der harmonischen Verzerrungen 42 im Frequenzbereich bestimmt.

Die Wandlung des jeweiligen Fehlersignals birgt gegenüber der Wandlung z.B. des Signals der Winkelposition 16 den Vorteil, dass das Fehlersignal keine zusätzlichen Frequenzen enthält. Diese zusätzlichen Frequenzen können beispielsweise von einer Sägezahn-Struktur der Winkelposition stammen.

Anschließend wird für ein kleineres, begrenztes Frequenzspektrum wiederholt eine Wandlung in den Frequenzbereich vorgenommen (vorstehend als erste Wandlung bezeichnet), wobei ebenfalls wiederum der Schleppfehler 33, der Geschwindigkeitsfehler 35 und/oder der Stromfehler 37 in den Frequenzbereich transformiert werden. Aufgrund der ersten Wandlung wird dann ein Ausgleichssignal 36 (siehe Fig. 2) erzeugt, welches die harmonischen Verzerrungen 42 reduziert.

Es versteht sich, dass für die erste und/oder zweite Wandlung ebenso die Winkelposition 16, die Geschwindigkeit 18 und/oder der Motorstrom 20 verwendet werden können.

In Fig. 2 ist eine in der Steuereinheit 12 enthaltene Motorsteuerung 24 gezeigt. Die Motorsteuerung 24 umfasst in Reihe geschaltet eine Positionssteuerung 26, eine Geschwindigkeits-Steuerung 28 und eine Strom-Steuerung 30. Der Positions-Steuerung 26 wird eine Positionsreferenz 32 und die Winkelposition 16 zugeführt. Der Geschwindigkeits-Steuerung 28 wird ein eine Geschwindigkeits-Vorsteuerung 34 auf die Geschwindigkeits-Vorgabe der Positionssteuerung 26 addiert und die Differenz zum Geschwindigkeits-Messwert 18 der Geschwindigkeits-Steuerung 28 zugeführt. Schließlich werden bei der Strom-Steuerung 30 die Summe aus Strom-Vorsteuerwert 22 und Ausgleichssignal 36 auf die Strom-Vorgabe der Geschwindigkeits-Steuerung 28 addiert und der Strom-Messwert 20 subtrahiert, wobei das Ergebnis der Strom-Steuerung 30 zugeführt wird.

Durch die Zuführung des Ausgleichssignals 36 zu der Strom-Steuerung 30 kann die Motorsteuerung 24 nahezu unverändert betrieben werden und berücksichtigt dennoch das Ausgleichssignal 36, welches von der Motorsteuerung 24 dann dem Elektromotor 10 zugeführt wird.

Schließlich zeigt Fig. 2 noch eine unbekannte Störung 39, welche die Quelle der harmonischen Verzerrungen 42 sein kann.

Fig. 3A und 3B zeigen die Stärke der harmonischen Verzerrungen 42 bei unterschiedlichen Drehzahlen des Elektromotors 10. Fig. 3A zeigt dabei eine Geschwindigkeit von 100 °/s, wohingegen Fig. 3B eine Geschwindigkeit von 1800 °/s zeigt. In beiden Fig. 3A, 3B ist linker Hand der Verlauf eines Positionsfehlersignals 38 ohne Unterdrückung von harmonischen Verzerrungen 42 und eines Positionsfehlersignals 40 mit Unterdrückung von harmonischen Verzerrungen 42 über die Zeit zu sehen. Nach der Transformation in den Frequenzbereich ist rechter Hand zu erkennen, welche harmonischen Verzerrungen 42 auftreten. Es ist ersichtlich, dass bei unterschiedlichen Rotationsgeschwindigkeiten des Elektromotors 10 die harmonischen Verzerrungen 42 bei unterschiedlichen Frequenzen liegen. Auch liegen die harmonischen Verzerrungen 42 bei unterschiedlichen Vielfachen der Rotationsfrequenz des Elektromotors 10. Die Positionsermittlung der jeweils dominantesten, das heißt in den Diagrammen von Fig. 3A und 3B jeweils am weitesten aufragenden harmonischen Verzerrungen 42, erfolgt durch die voranstehend beschriebene zweite Wandlung. Hierauf basierend wird dann ein erstes Frequenzspektrum 44 festgelegt, welches im Beispiel der Fig. 3A und 3B drei abgeschlossene Frequenzbänder 46 umfasst. Aufgrund der dann folgenden wiederholt durchgeführten ersten Wandlung nur für das erste Frequenzspektrum 44 wird dann das Ausgleichssignal 36 erzeugt.

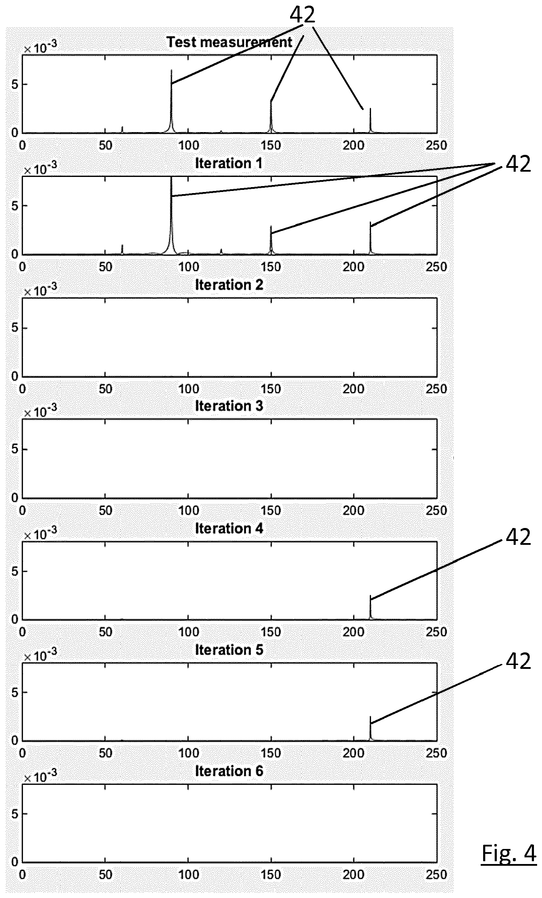

Das Ausgleichssignal 36 kann dann sukzessive die vorhandenen harmonischen Verzerrungen 42 reduzieren, wie dies in Fig. 4 gezeigt ist. In Fig. 4 sind mehrere Iterationen dargestellt, das heißt es wurden jeweils erste Wandlungen durchgeführt, woraufhin dann jeweils auf der ersten Wandlung basierend Ausgleichssignale 36 erzeugt wurden. Es ist zu erkennen, dass nach Iteration 2 die harmonischen Verzerrungen 42 praktisch vollständig verschwunden sind. In Iteration 4 und 5 treten neue harmonische Verzerrungen 42 auf, die jedoch dann in Iteration 6 sofort durch das adaptive Verhalten der Steuereinheit 12 wieder eliminiert werden.

Es ist somit ersichtlich, dass durch die Möglichkeit der schnellen Bereitstellung des Ausgleichssignals 36 mittels der im Frequenzspektrum eingeschränkten ersten Wandlung eine zuverlässige und schnelle Reduktion der harmonischen Verzerrungen 42, auch bei sich ändernden Verzerrungen, erfolgen kann.

### Bezugszeichenliste

- 10: Elektromotor
- 12: Steuereinheit
- 14: Last
- 16: Winkelposition
- 18: Geschwindigkeit
- 20: Motorstrom
- 22: Strom-Vorsteuerwert
- 24: Motorsteuerung
- 26: Positionssteuerung
- 28: Geschwindigkeitssteuerung
- 30: Stromsteuerung
- 32: Positions-Referenz
- 33: Schleppfehler
- 34: Geschwind igkeits-Vorsteuerung
- 35: Geschwindigkeitsfehler
- 36: Ausgleichssignal
- 37: Stromfehler
- 38: Positionsfehlersignal ohne Ausgleich der Harmonischen
- 39: unbekannte Störung
- 40: Positionsfehlersignal mit Ausgleich der Harmonischen
- 42: Harmonische Verzerrung
- 44: erstes Frequenzspektrum
- 46: Frequenzband

## Patentansprüche

1. Verfahren zum Betreiben einer elektrischen Maschine (10), insbesondere eines elektrischen Motors, wobei
- die elektrische Maschine (10) elektrisch mit einer Steuereinheit (12) verbunden ist,
- die elektrische Maschine (10) beim Betrieb Verzerrungen (42), insbesondere harmonischen Verzerrungen, unterliegt,
wobei die Verzerrungen (42) nur zum Teil erfasst werden, indem wiederholt eine erste Wandlung der Verzerrungen (42) in den Frequenzbereich nur für diejenigen Verzerrungen (42) erfolgt, welche innerhalb eines vorbestimmten ersten Frequenzspektrums (44) liegen, wobei auf der Grundlage der ersten Wandlung ein Ausgleichssignal (36) erzeugt wird, welches die Verzerrungen (42) vermindert,
**dadurch gekennzeichnet, dass**
eine zweite Wandlung der Verzerrungen (42) in den Frequenzbereich erfolgt, wobei die zweite Wandlung für ein zweites Frequenzspektrum erfolgt, welches größer als das erste Frequenzspektrum (44) ist und das erste Frequenzspektrum (44) umfasst, wobei anhand des Ergebnisses der zweiten Wandlung das erste Frequenzspektrum (44) vorbestimmt wird,
und wobei die zweite Wandlung wiederholt und zugleich weniger oft als die erste Wandlung durchgeführt wird.

2. Verfahren nach Anspruch 1,
**dadurch gekennzeichnet, dass**
die erste Wandlung mittels einer diskreten Fourier-Transformation (DFT) und/oder mittels des Goertzel-Algorithmus erfolgt.

3. Verfahren nach Anspruch 1 oder 2,
**dadurch gekennzeichnet, dass**
das Ausgleichssignal (36) in Echtzeit aus dem Ergebnis der ersten Wandlung adaptiv erzeugt wird.

4. Verfahren nach zumindest einem der vorstehenden Ansprüche,
**dadurch gekennzeichnet, dass**
das vorbestimmte erste Frequenzspektrum (44) auf eine Maximalfrequenz beschränkt ist und/oder mehrere abgeschlossene Frequenzbänder (46) umfasst.

5. Verfahren nach zumindest einem der vorstehenden Ansprüche,
**dadurch gekennzeichnet, dass**
das erste Frequenzspektrum (44) derart vorbestimmt wird, dass das erste Frequenzspektrum (44) nur eine vorbestimmte maximale Anzahl von Verzerrungsmaxima beinhaltet, insbesondere maximal sechs oder drei Verzerrungsmaxima.

6. Verfahren nach zumindest einem der vorstehenden Ansprüche,
**dadurch gekennzeichnet, dass**
das Ausgleichssignal (36) mit Hilfe einer Nachschlagetabelle generiert wird.

7. Verfahren nach zumindest einem der vorstehenden Ansprüche,
**dadurch gekennzeichnet, dass**
das Ausgleichssignal (36) mit Hilfe eines adaptiven Algorithmus generiert wird, wobei der adaptive Algorithmus neu auftretende Verzerrungen (42) erkennt und vermindert.

8. Verfahren nach zumindest einem der vorstehenden Ansprüche,
**dadurch gekennzeichnet, dass**
ein Fehlersignal (33, 35, 37) einer Messgröße (16, 18, 20) für die Wandlung in den Frequenzbereich verwendet wird.

9. Verfahren nach zumindest einem der vorstehenden Ansprüche,
**dadurch gekennzeichnet , dass**
die Verzerrungen (42) basierend auf Änderungen der Position (θ) und/oder der Geschwindigkeit (ω) und/oder des elektrischen Stroms (I_{q}) der elektrischen Maschine (10) ermittelt werden.

10. Verfahren nach zumindest einem der vorstehenden Ansprüche,
**dadurch gekennzeichnet, dass**
die zweite Wandlung mehr als 10, 100, 500 oder 1000 Mal seltener als die erste Wandlung durchgeführt wird.

11. Verfahren nach zumindest einem der vorstehenden Ansprüche,
**dadurch gekennzeichnet, dass**
das Ausgleichssignal (36) ein elektrisches Stromsignal ist, welches der elektrischen Maschine (10) zugeführt wird.

12. Verfahren nach zumindest einem der vorstehenden Ansprüche,
**dadurch gekennzeichnet, dass**
der elektrischen Maschine (10) ein elektrisches Ansteuersignal zugeführt wird, welches von der Steuereinheit (12) erzeugt wird, wobei die Steuereinheit (12) in Reihe geschaltet eine Positions-Steuerung (26) und/oder eine Geschwindigkeits-Steuerung (28) und/oder eine Strom-Steuerung (30) umfasst, wobei das Ausgleichssignal (36) bevorzugt einem Eingangssignal der Strom-Steuerung (30) hinzugefügt wird.

13. System mit einer elektrischen Maschine (10) und einer Steuereinheit (12), wobei
- die elektrische Maschine (10) elektrisch mit der Steuereinheit (12) verbunden ist,
- die elektrische Maschine (10) beim Betrieb Verzerrungen (42), insbesondere harmonischen Verzerrungen, unterliegt,
wobei die Steuereinheit (12) ausgebildet ist, die Verzerrungen (42) nur zum Teil zu erfassen, indem von der Steuereinheit (12) wiederholt eine erste Wandlung der Verzerrungen (42) in den Frequenzbereich nur für diejenigen Verzerrungen (42) durchgeführt wird, welche innerhalb eines vorbestimmten ersten Frequenzspektrums liegen, wobei die Steuereinheit (12) auf der Grundlage der ersten Wandlung ein Ausgleichssignal (36) erzeugt, welches die Verzerrungen (42) vermindert,
**dadurch gekennzeichnet, dass**
die Steuereinheit (12) ausgebildet ist, eine zweite Wandlung der Verzerrungen (42) in den Frequenzbereich vorzunehmen, wobei die zweite Wandlung für ein zweites Frequenzspektrum erfolgt, welches größer als das erste Frequenzspektrum (44) ist und das erste Frequenzspektrum (44) umfasst, wobei anhand des Ergebnisses der zweiten Wandlung das erste Frequenzspektrum (44) vorbestimmt wird,
und wobei die zweite Wandlung wiederholt und zugleich weniger oft als die erste Wandlung durchgeführt wird.

## Claims

1. A method of operating an electric machine (10), in particular an electric motor, wherein
- the electric machine (10) is electrically connected to a control unit (12),
- the electric machine (10) is subject to distortions (42), in particular harmonic distortions, during operation,
wherein the distortions (42) are detected only in part in that a first conversion of the distortions (42) into the frequency range repeatedly takes place only for those distortions (42) which lie within a predetermined first frequency spectrum (44), wherein a compensation signal (36) which reduces the distortions (42) is generated on the basis of the first conversion, **characterized in that**
a second conversion of the distortions (42) into the frequency range takes place, with the second conversion taking place for a second frequency spectrum which is larger than the first frequency spectrum (44) and comprises the first frequency spectrum (44), with the first frequency spectrum (44) being predetermined based on the result of the second conversion,
and with the second conversion being performed repeatedly and at the same time less often than the first conversion.

2. A method in accordance with claim 1,
**characterized in that**
the first conversion takes place by means of a discrete Fourier transform (DFT) and/or by means of the Goertzel algorithm.

3. A method in accordance with claim 1 or claim 2,
**characterized in that**
the compensation signal (36) is adaptively generated in real time from the result of the first conversion.

4. A method in accordance with at least one of the preceding claims,
**characterized in that**
the predetermined first frequency spectrum (44) is limited to a maximum frequency and/or comprises a plurality of closed frequency bands (46).

5. A method in accordance with at least one of the preceding claims,
**characterized in that**
the first frequency spectrum (44) is predetermined such that the first frequency spectrum (44) only includes a predetermined maximum number of distortion maxima, in particular a maximum of six or three distortion maxima.

6. A method in accordance with at least one of the preceding claims,
**characterized in that**
the compensation signal (36) is generated with the aid of a look-up table.

7. A method in accordance with at least one of the preceding claims,
**characterized in that**
the compensation signal (36) is generated by means of an adaptive algorithm, with the adaptive algorithm recognizing and reducing newly occurring distortions (42).

8. A method in accordance with at least one of the preceding claims,
**characterized in that**
an error signal (33, 35, 37) of a measurement variable (16, 18, 20) is used for the conversion into the frequency range.

9. A method in accordance with at least one of the preceding claims,
**characterized in that**
the distortions (42) are determined based on changes of the position (θ) and/or the speed (ω) and/or the electric current (I_{q}) of the electric machine (10).

10. A method in accordance with at least one of the preceding claims,
**characterized in that**
the second conversion is performed more than 10, 100, 500 or 1000 times less frequently than the first conversion.

11. A method in accordance with at least one of the preceding claims,
**characterized in that**
the compensation signal (36) is an electric current signal which is supplied to the electric machine (10).

12. A method in accordance with at least one of the preceding claims,
**characterized in that**
an electric control signal which is generated by the control unit (12) is supplied to the electric machine (10), with the control unit (12) comprising, connected in series, a position control (26) and/or a speed control (28) and/or a current control (30), with the compensation signal (36) preferably being added to an input signal of the current control (30).

13. A system comprising an electric machine (10) and a control unit (12),
wherein
- the electric machine (10) is electrically connected to the control unit (12),
- the electric machine (10) is subject to distortions (42), in particular harmonic distortions, during operation,
wherein the control unit (12) is configured to detect the distortions (42) only in part in that a first conversion of the distortions (42) into the frequency range is performed by the control unit (12) only for those distortions (42) which lie within a predetermined first frequency spectrum, wherein the control unit (12) generates a compensation signal (36), which reduces the distortions (42), on the basis of the first conversion,
**characterized in that**
the control unit (12) is configured to perform a second conversion of the distortions (42) into the frequency range, with the second conversion taking place for a second frequency spectrum which is larger than the first frequency spectrum (44) and comprises the first frequency spectrum (44), with the first frequency spectrum (44) being predetermined based on the result of the second conversion,
and with the second conversion being performed repeatedly and at the same time less often than the first conversion.

## Revendications

1. Procédé pour faire fonctionner une machine électrique (10), en particulier un moteur électrique, dans lequel
- la machine électrique (10) est reliée électriquement à une unité de commande (12),
- la machine électrique (10) est soumise à des distorsions (42), en particulier à des distorsions harmoniques, lors du fonctionnement,
les distorsions (42) n'étant détectées qu'en partie, en effectuant de manière répétée une première conversion des distorsions (42) dans le domaine des fréquences uniquement pour celles des distorsions (42) qui se situent à l'intérieur d'un premier spectre de fréquences (44) prédéterminé, un signal de compensation (36) étant généré sur la base de la première conversion, lequel réduit les distorsions (42),
**caractérisé en ce que**
il se produit une deuxième conversion des distorsions (42) dans le domaine des fréquences, la deuxième conversion étant effectuée pour un deuxième spectre de fréquences qui est plus grand que le premier spectre de fréquences (44) et qui comprend le premier spectre de fréquences (44), le premier spectre de fréquences (44) étant prédéterminé à l'aide du résultat de la deuxième conversion,
et la deuxième conversion est effectuée de manière répétée et en même temps moins souvent que la première conversion.

2. Procédé selon la revendication 1,
**caractérisé en ce que**
la première conversion est effectuée au moyen d'une transformée de Fourier discrète (DFT) et/ou au moyen de l'algorithme de Goertzel.

3. Procédé selon la revendication 1 ou 2,
**caractérisé en ce que**
le signal de compensation (36) est généré de manière adaptative en temps réel à partir du résultat de la première conversion.

4. Procédé selon l'une au moins des revendications précédentes,
**caractérisé en ce que**
le premier spectre de fréquences (44) prédéterminé est limité à une fréquence maximale et/ou comprend plusieurs bandes de fréquences (46) fermées.

5. Procédé selon l'une au moins des revendications précédentes,
**caractérisé en ce que**
le premier spectre de fréquences (44) est prédéterminé de telle sorte que le premier spectre de fréquences (44) ne comprend qu'un nombre maximal prédéterminé de maxima de distorsion, en particulier au maximum six ou trois maxima de distorsion.

6. Procédé selon l'une au moins des revendications précédentes,
**caractérisé en ce que**
le signal de compensation (36) est généré à l'aide d'une table de consultation.

7. Procédé selon l'une au moins des revendications précédentes,
**caractérisé en ce que**
le signal de compensation (36) est généré à l'aide d'un algorithme adaptatif, l'algorithme adaptatif détectant et réduisant les distorsions (42) nouvellement apparues.

8. Procédé selon l'une au moins des revendications précédentes,
**caractérisé en ce que**
un signal d'erreur (33, 35, 37) d'une grandeur de mesure (16, 18, 20) est utilisé pour la conversion dans le domaine des fréquences.

9. Procédé selon l'une au moins des revendications précédentes,
**caractérisé en ce que**
les distorsions (42) sont déterminées sur la base des variations de la position (θ) et/ou de la vitesse (ω) et/ou du courant électrique (I_{q}) de la machine électrique (10).

10. Procédé selon l'une au moins des revendications précédentes,
**caractérisé en ce que**
la deuxième conversion est effectuée plus de 10, 100, 500 ou 1000 fois moins souvent que la première conversion.

11. Procédé selon l'une au moins des revendications précédentes,
**caractérisé en ce que**
le signal de compensation (36) est un signal de courant électrique qui est amené à la machine électrique (10).

12. Procédé selon l'une au moins des revendications précédentes,
**caractérisé en ce que**
un signal électrique de pilotage est amené à la machine électrique (10), lequel est généré par l'unité de commande (12), l'unité de commande (12) comprenant, en série, une commande de position (26) et/ou une commande de vitesse (28) et/ou une commande de courant (30), le signal de compensation (36) étant de préférence ajouté à un signal d'entrée de la commande de courant (30).

13. Système comprenant une machine électrique (10) et une unité de commande (12), dans lequel
- la machine électrique (10) est reliée électriquement à l'unité de commande (12),
- la machine électrique (10) est soumise à des distorsions (42), en particulier à des distorsions harmoniques, lors du fonctionnement,
l'unité de commande (12) étant réalisée pour ne détecter les distorsions (42) qu'en partie du fait que l'unité de commande (12) effectue de manière répétée une première conversion des distorsions (42) dans le domaine des fréquences uniquement pour celles des distorsions (42) qui se situent à l'intérieur d'un premier spectre de fréquences prédéterminé, l'unité de commande (12) générant un signal de compensation (36) sur la base de la première conversion, lequel réduit les distorsions (42),
**caractérisé en ce que**
l'unité de commande (12) est réalisée pour effectuer une deuxième conversion des distorsions (42) dans le domaine des fréquences, la deuxième conversion étant effectuée pour un deuxième spectre de fréquences qui est plus grand que le premier spectre de fréquences (44) et qui comprend le premier spectre de fréquences (44), le premier spectre de fréquences (44) étant prédéterminé à l'aide du résultat de la deuxième conversion,
et la deuxième conversion est effectuée de manière répétée et en même temps moins souvent que la première conversion.
